# EUROPÄISCHE PATENTSCHRIFT

(11) **EP 1 005 821 B1**
(45) Veröffentlichungstag und Bekanntmachung des Hinweises auf die Patenterteilung: **03.03.2004**
(21) Anmeldenummer: 99122892.5
(22) Anmeldetag: 18.11.1999
(51) Int. Cl.: A47J 31/40

(54) **Brüheinrichtung (Monobrüher) zur Zubereitung von Kaffee oder Tee**
Brewing device (Mono-brewing device) for the preparation of coffee or tea
Dispositif-infuseur (mono-infuseur) pour la préparation du café ou du thé

(30) Priorität: 01.12.1998 DE 19855271
(43) Veröffentlichungstag der Anmeldung: 07.06.2000
(73) Patentinhaber: Spengler GmbH & Co. KG, 76646 Bruchsal (DE)
(72) Erfinder: Obbens, Stephanus Henricus Maria, Dipl.-Ing., 5554 LX Valkenswaard (NL); Hendriks, Joris Gerardus, Dipl.-Ing., 6903 WT Zevenar (NL); Lansche, Reinhard, Dipl.-Ing., 69198 Schriesheim (DE)
(74) Vertreter: Fischer, Wolf-Dieter, Dipl.-Ing.

(56) Entgegenhaltungen:
- WO-A-98/39998
- DE-C- 19 647 385

## Beschreibung

Die Erfindung betrifft eine Brüheinrichtung zur Zubereitung von Kaffee oder Tee mit einem Zylindergehäuse, das einen den Zylinder verschließenden Brausekörper sowie einen Siebkörper aufweist, wobei die Bewegung des Brausekörpers mittels Kurvenscheiben steuerbar ist.

Eine derartige Brüheinrichtung ist aus WO-A-98/39998 bekannt.

Bei Heißgetränkeautomaten, die frisch gebrühte Getränke anbieten, z.B. Tee, Kaffee und Espresso, ist die Brüheinrichtung selbst eine der wichtigsten Komponenten. Hier wird die Qualität eines Getränkes entscheidend mitbestimmt. Die bekannten derartigen Brüheinrichtungen bauen verhältnismäßig groß, bestehen aus vielen Teilen, sind oftmals auch komplex aufgebaut und schwierig zu reinigen.

Der Erfindung liegt die Aufgabe zugrunde, eine derartige Brüheinrichtung so auszubilden, daß sie sehr kompakt baut, wenig Teile aufweist und wenig Verschmutzungsansätze bietet und somit leicht zu handhaben und zu reinigen ist.

Diese Aufgabe wird nach der Erfindung dadurch gelöst, daß das Zylindergehäuse orthogonal zur Zylinderachse zentrale Zapfen und zu beiden Seiten in der Vertikalebene der Zapfen an glatten Außenflächen spiegelbildliche Kurvenbahnen aufweist, daß auf den Zapfen beidseitig Kurvenscheiben mit weiteren Kurvenbahnen zur Steuerung der Bewegungen des Brausekörpers angeordnet sind.

Eine vorteilhafte Ausführungsform besteht darin, daß der Siebkörper zwei seitliche Schenkel mit Zapfen aufweist, die zum Verschieben in der Zylinderachse in Kurvenbahnen der Kurvenscheiben laufen.

Weiter ist es vorteilhaft, daß zum Verschieben des Siebkörpers oder eines Kolbens ein Eigenantrieb vorgesehen ist.

Es wird weiterhin vorgeschlagen, daß der Brausekörper zur beidseitigen Führung außen am Gehäuse seitliche Schenkel mit jeweils beidseitigen Zapfen aufweist, die in Kurvenbahnen des Gehäuses und der Kurvenscheiben laufen.

Vorteilhaft geht man so vor, daß die seitlichen Schenkel des Brausekörpers und des Siebkörpers parallel zur Zylinderachse verlaufende, nach außen offene Langlöcher aufweisen, die an den Gehäusezapfen geführt sind.

Es wird weiterhin vorgeschlagen, daß an der Innenseite der Kurvenscheiben die Kurvenbahnen für den Brausekörper und an der Außenseite die Kurvenbahnen für den Siebkörper angeordnet sind.

Vorteilhaft sind die Kurvenscheiben am Umfang mit einer Verzahnung versehen.

Eine vorteilhafte Ausführungsform sieht vor, daß der Kolben eine angesetzte Spindel aufweist, die mit einem im Zylindergehäuse gelagerten und angetriebenen Zahnrad mit Innengewinde zusammenwirkt.

Es ist vorteilhaft, daß an der Oberseite oder Unterseite des Zylindergehäuses quer verschiebbare Wischer angeordnet sind.

Vorteilhaft geht man so vor, daß der an der Gehäuseoberseite angeordnete Wischer seitlich am Brausekörper angelenkt ist.

Es wird weiterhin vorgeschlagen, daß die Brühwasserzuführung in den Brausekörper über das Zylindergehäuse mit einem Elastomerformteil oder über den Siebkörper bzw. den Kolben erfolgt.

Schließlich ist es vorteilhaft, daß die Baugruppe in eine Rückwand einrastbar ist.

Die kompakte Bauweise ergibt sich insbesondere durch den Brühzylinder als zentralen Korpus, um den sich die weiteren Funktionsteile aufbauen. Weiterhin wird die Kompaktheit dadurch erreicht, daß sich der Brausekopf nur minimal vom Brühzylinder abhebt und hierbei in eine Radialbewegung ausschwenkt. Weiterhin kann der Siebkörper vertikal nach unten gefahren werden, so daß der Kaffee- oder Teesatz mit einem Wischer vom Brühsieb entfernt werden kann. Man kann auch durch eine Radialbewegung das Sieb an einem stationären Wischer vorbeiführen und den Kaffee- oder Teesatz entfernen. Die Kinematik zur Erzeugung der Vertikalbewegung der Brause und des Brühsiebes sowie der Radialbewegung der Brause ist seitlich des Brühzylinders links und rechts angebracht und abgedeckt, so daß außen nur glatte Oberflächen vorhanden sind. Die erforderlichen Antriebe und Sensoren sind gekapselt und abgeschirmt hinter einer Platte angebracht. Die Brüheinrichtung kann insgesamt von einer Platte abgenommen und ohne die elektrischen Teile in einer Spülmaschine gereinigt werden.

Die Erfindung wird in der nachfolgenden Beschreibung anhand von in den Zeichnungen dargestellten Ausführungsbeispielen näher erläutert.

Es zeigen,
- Fig. 1: eine erste Ausführungsform einer derartigen Brüheinrichtung zum Brühen von Kaffee oder Tee in schaubildlicher Ansicht,
- Fig. 2: einen Schnitt nach der Linie A-A in Fig. 1,
- Fig. 3: eine Schnittdarstellung des Oberteils des Zylindergehäuses mit den Zuführleitungen für das Wasser bzw. den Ausgang des gebrühten Getränkes,
- Fig. 4: eine Teildraufsicht auf das Zylindergehäuse,
- Fig. 5 bis 8: schematische Darstellungen der Brüheinrichtung gemäß den einzelnen Schritten für den Zubereitungsprozeß,
- Fig. 9: eine schaubildliche Ansicht einer derartigen Brüheinrichtung für die Zubereitung von Espresso,
- Fig. 10: einen Schnitt nach der Linie B-B in Fig. 9,
- Fig. 11: eine Teilansicht der Brüheinrichtung mit der Wasserzuführung bzw. dem Austritt des gebrühten Getränkes und
- Fig. 12 bis 17: schematische Darstellungen der Brüheinrichtung gemäß dem Ablauf des Brühprozesses.

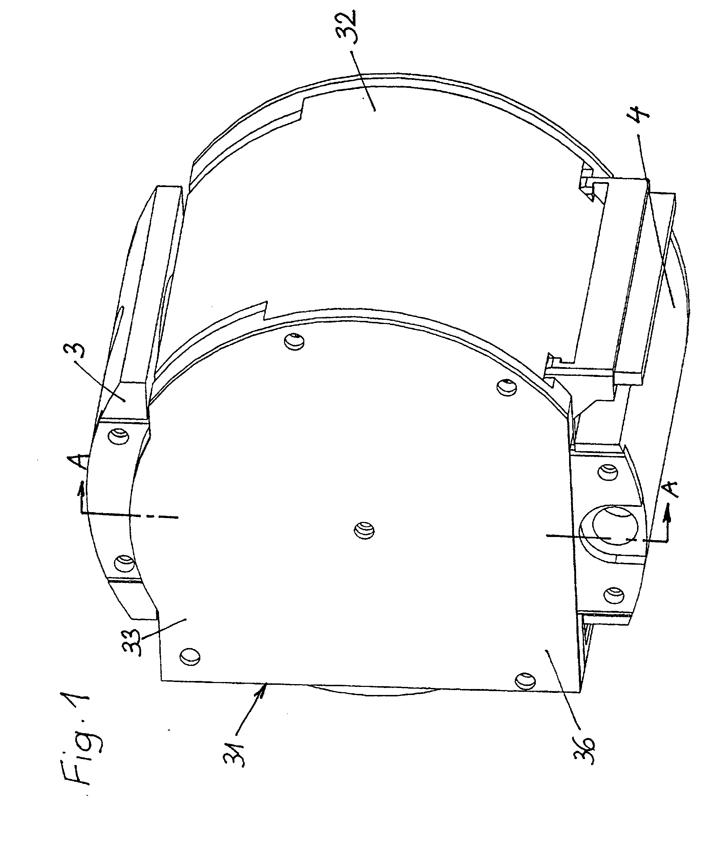

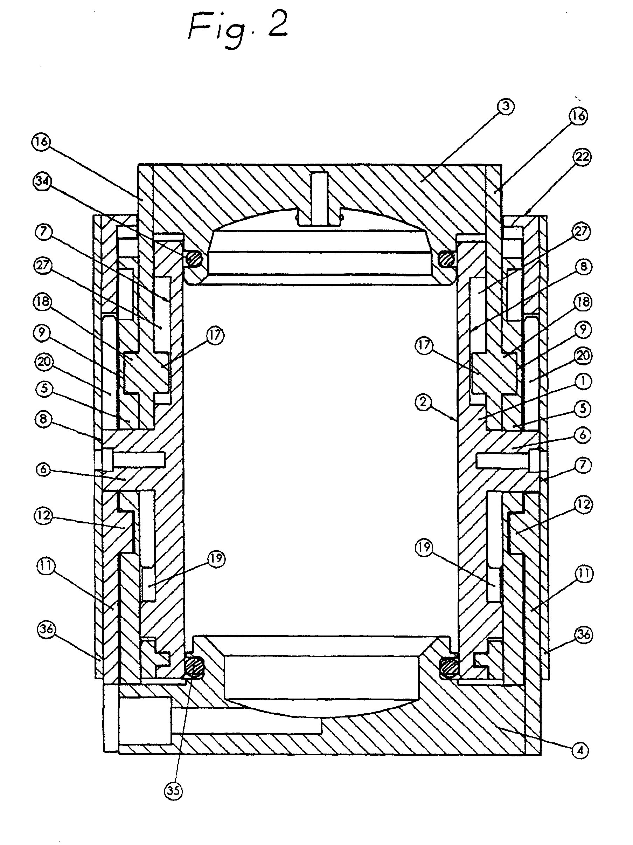

Die in den Figuren 1 bis 8 dargestellte Brüheinrichtung dient insbesondere zum Zubereiten von Kaffee oder Tee und besitzt ein in etwa würfelförmiges bzw. kubisches Zylindergehäuse 1 mit einem Zylinder 2, wobei die Achse des Zylinders 2 parallel zu einer Rückwand 31 steht, mit der das Gehäuse 1 an einer Montagewand befestigbar ist. Die Oberseite 22 und die Unterseite 23 des Zylindergehäuses 1 verlaufen senkrecht zur Zylinderachse, wobei die Oberseite 22 in einen radialen Zylindermantel 32 übergeht. Senkrecht zur Rückwand 31 und zur Oberseite 22 befinden sich zu beiden Seiten des Zylindergehäuses 1 Seitenflächen 33. In der Mitte des Gehäuses 1 befinden sich zentrale Zapfen 6, deren Achse orthogonal zur Zylinderachse verläuft und die senkrecht zu den Seitenflächen 33 angeordnet sind. Weiterhin sind zu beiden Seiten des Gehäuses 1 an glatten Außenflächen 8 der Vertikalebene 7 der Zapfen 6 Kurvenbahnen 27 vorgesehen.

Die Brüheinrichtung besitzt einen Brausekörper 3, der von der Oberseite 22 des Zylindergehäuses 1 wirksam ist und in den Zylinder 2 eingefahren werden kann, wobei eine Abdichtung mit Hilfe der im Rand angeordneten Dichtung 34 erfolgt. Der Brausekörper 3 besitzt zu beiden Seiten seitliche Schenkel 16, wobei in beiden Schenkeln 16 Langlöcher 19 angeordnet sind, die sich in Längsrichtung der Schenkel 16 zum Brausekörpers 3 erstrecken.

An der gegenüberliegenden Seite ist der Zylinder 2 mit Hilfe eines Siebkörpers 4 verschließbar, wobei dieser Siebkörper 4 ebenfalls eine Dichtung 35 aufweist und damit abdichtend in den Zylinder 2 schiebbar ist. Der Siebkörper 4 besitzt an zwei gegenüberliegenden Seiten seitliche Schenkel 11, die an ihrem freien Ende mit sich axial erstreckenden Langlöchern 20 versehen sind.

Zur Steuerung des Brausekörpers 3 und des Siebkörpers 4 für die einzelnen Verfahrensschritte dienen Kurvenscheiben 5, die auf die Zapfen 6 aufgesteckt sind. Diese Kurvenscheiben 6 besitzen Kurvenbahnen 9, 10, die sich jeweils an der Innen- bzw. Außenseite dieser Kurvenscheiben 5 befinden.

Der Brausekörper 3 liegt mit seinen Schenkeln 16 an den glatten Außenflächen 8 des Zylindergehäuses 1 an, wobei an diesen Schenkeln 16 sowohl innen als auch außen Zapfen 17 bzw. 18 vorgesehen sind, wobei die inneren Zapfen in der Kurvenbahn 27 des Gehäuses 1 und die äußeren Zapfen 18 in der Kurvenbahn 9 der Kurvenscheiben 5 geführt sind. An den Langlöchern 19 sind die seitlichen Schenkel 16 über die Zapfen 6 gesteckt und dort geführt.

Die Kurvenscheiben 5 sind von außen her über die seitlichen Schenkel 16 des Brausekörpers 3 gesteckt und die seitlichen Schenkel 11 des Siebkörpers 4 kommen an die Außenflächen der Kurvenscheiben 5 zur Anlage. Diese seitlichen Schenkel 11 besitzen nach innen hin, d.h. zu den Kurvenscheiben 5 Zapfen 12, die in entsprechenden Kurvenbahnen 10 der Kurvenscheiben 5 geführt sind. An den Langlöchern 20 sind die seitlichen Schenkel 11 über die zentralen Zapfen 6 gesteckt. Die achsparallele Führung der seitlichen Schenkel 11 erfolgt an Gehäuseseitenteilen 36, in denen entsprechende Gleitbahnen vorgesehen sind.

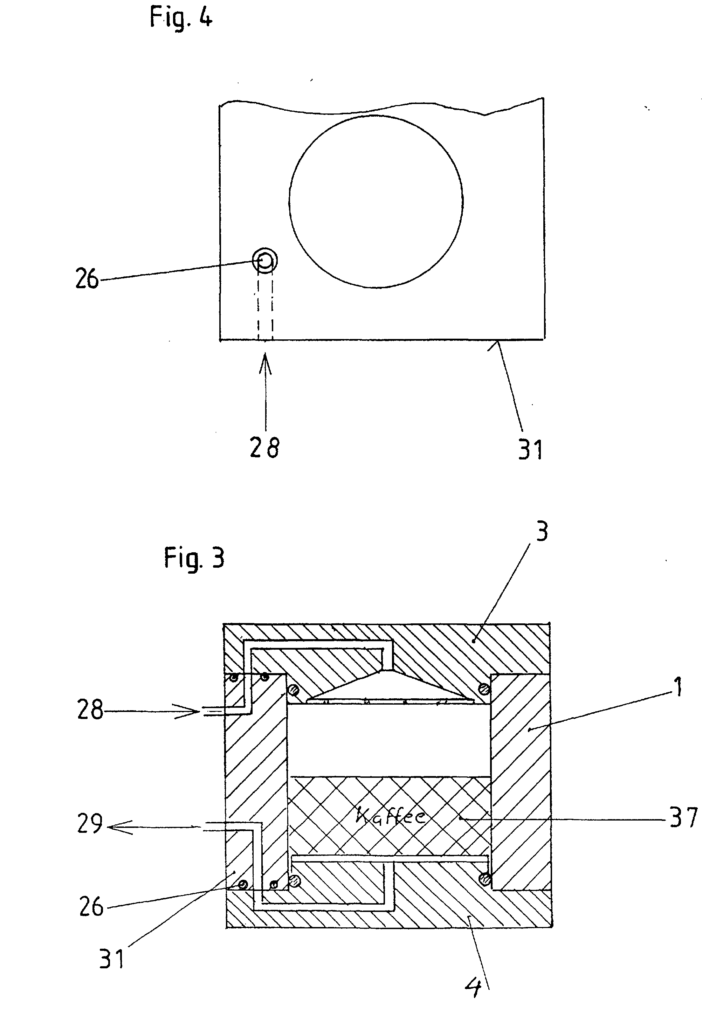

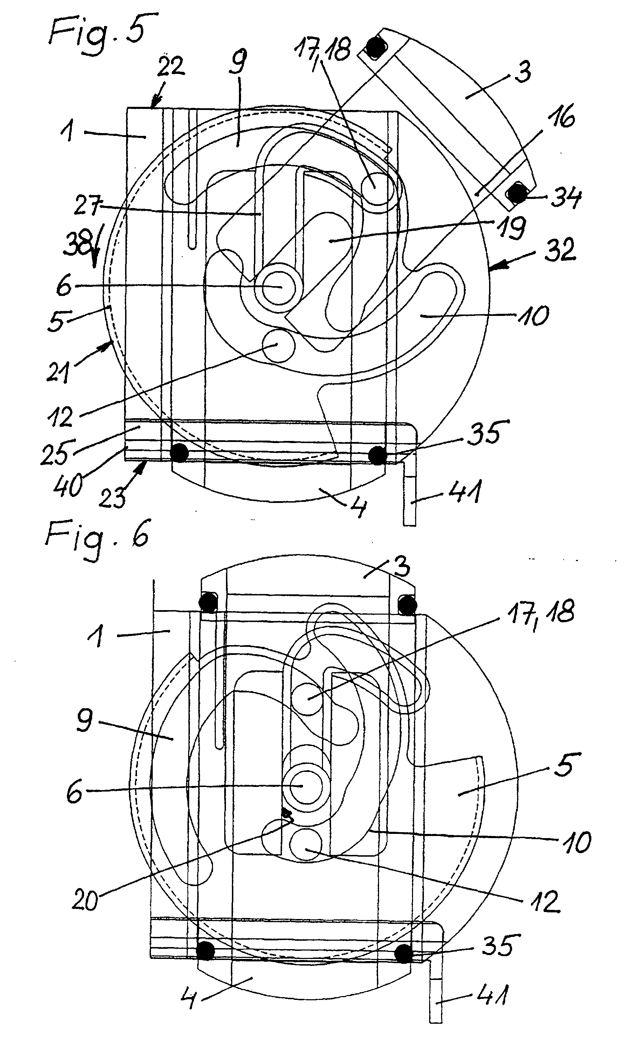

Die Figuren 3 und 4 zeigen die Möglichkeit einer Wasserzufuhr 28 und eines Kaffeeausganges 29, wobei sich z.B. das Kaffeemehl 37 im Zylinder 2 befindet. Die Wasserzufuhr erfolgt über das Zylindergehäuse 1 und gelangt an der Oberseite 22 in den Brausekörper 3, wobei zwischen dem Brausekörper 3 und dem Gehäuse 1 ein Elastomerformteil 26 als Dichtung vorgesehen ist. Der Kaffeeausgang 29 erfolgt über den Siebkörper 4, wobei der entsprechende Kanal über das Zylindegehäuse 1 an der Rückwand 31 herausgeführt wird und sich zwischem dem Gehäuse 1 und dem Siebkörper 4 eine entsprechende Dichtung 26 befindet.

Die Funktion für den Brühzyklus ergibt sich aus den Figuren 5 bis 8. Die Fig. 5 zeigt die Position der Teile vor dem Einfüllen von Kaffee oder Tee. Hierzu ist der Brausekörper 3 am weitesten nach außen gefahren und radial weggeschwenkt. Dies erfolgt an den Zapfen 17, 18, die sich in der Endstellung der Kurvenbahnen 27 und in der Kurvenbahn 9 befinden. Die weitere Führung erfolgt an den Langlöchern 19 in Verbindung mit den Zapfen 6. Der Siebkörper 4 ist in den Zylinder 2 eingefahren und verschließt diesen dicht.

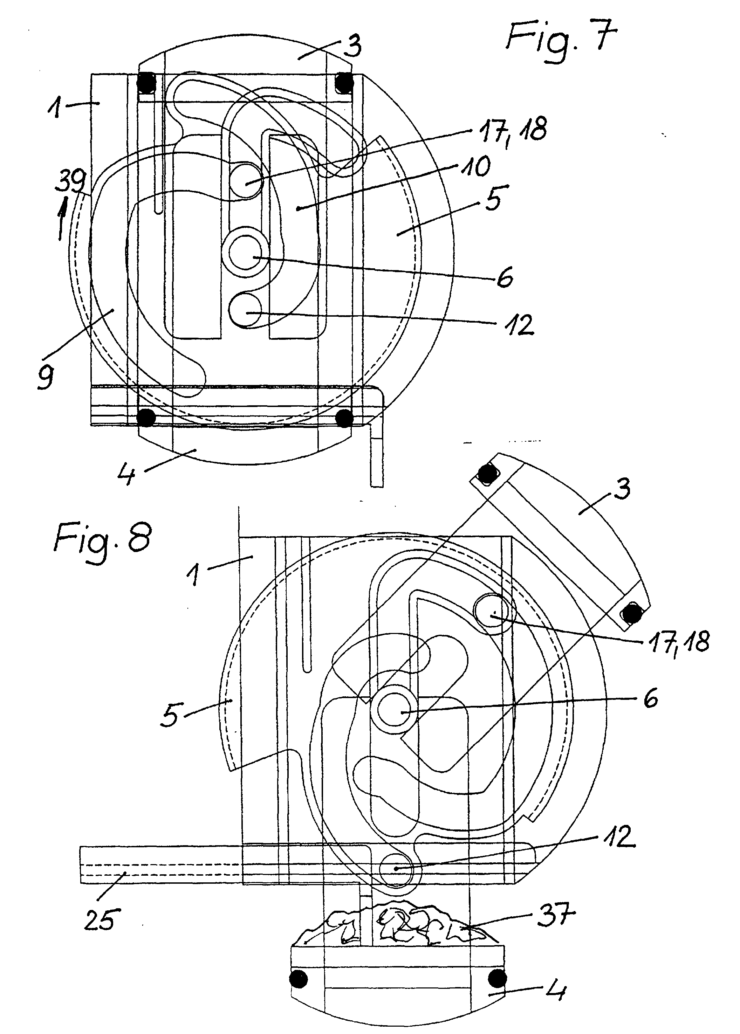

In der Position gemäß Fig. 6 erfolgt ein Vorbrühen, indem die Kurvenscheiben 5 in Pfeilrichtung 38 (Fig. 5) verschwenkt werden, wodurch der Brausekörper 3 radial nach innen geschwenkt wird und achsparallel zur Zylinderachse, jedoch noch außerhalb des Zylinders angeordnet ist. In den Positionen nach den Figuren 5 und 6 ist der Zapfen 12 innerhalb der Kurvenbahn 10 so geführt, daß keine Verschiebung des Siebkörpers 4 erfolgt.

Die Fig. 7 zeigt die Endstellung für den Brühvorgang, wobei die Kurvenscheiben 5 noch weiter in Pfeilrichtung 38 verschwenkt werden und hierbei die Zapfen 17, 18 bzw. 12 innerhalb der Kurven 9, 27 bzw. 10 ihre Endposition erreichen. In dieser Position sind in dem Zylinder 2 sowohl der Brausekörper 3 als auch der Siebkörper 4 eingefahren.

Nachdem das gebrühte Produkt entnommen ist, werden die Kurvenscheiben 5 in entgegengesetzter Richtung, d.h. in Pfeilrichtung 39 zurückgeschwenkt und es ergibt sich die Endposition gemäß Fig. 8. Hierbei wird der Brausekörper 3 zunächst axial nach außen geschoben und dann radial weggeschwenkt. Der Siebkörper 4 wird nach unten hin verschoben, so daß das verbrauchte Kaffeemehl 37 entfernt werden kann. Dazu dient ein Wischer 25, der sich an der Unterseite 23 des Gehäuses 1 befindet und dort an einer Gleitbahn 40 geführt wird. Dieser Wischer 25 besitzt einen Gummischaber 41, mit dem er auf der inneren Ablagefläche des Siebkörpers 4 entlanggeschoben wird.

Die beiden Kurvenscheiben 5 sind an ihrem Umfang mit Verzahnungen 21 versehen, wobei diese Verzahnungen 21 über die Rückseite 31 des Zylindergehäuses 1 herausragen und so mit einem Antrieb kraftschlüssig verbunden werden können. Dieser Antrieb kann dabei auch mit dem Wischermechanismus gekoppelt werden, wobei durch eine entsprechende Steuerung der Brühvorgang automatisch ablaufen kann.

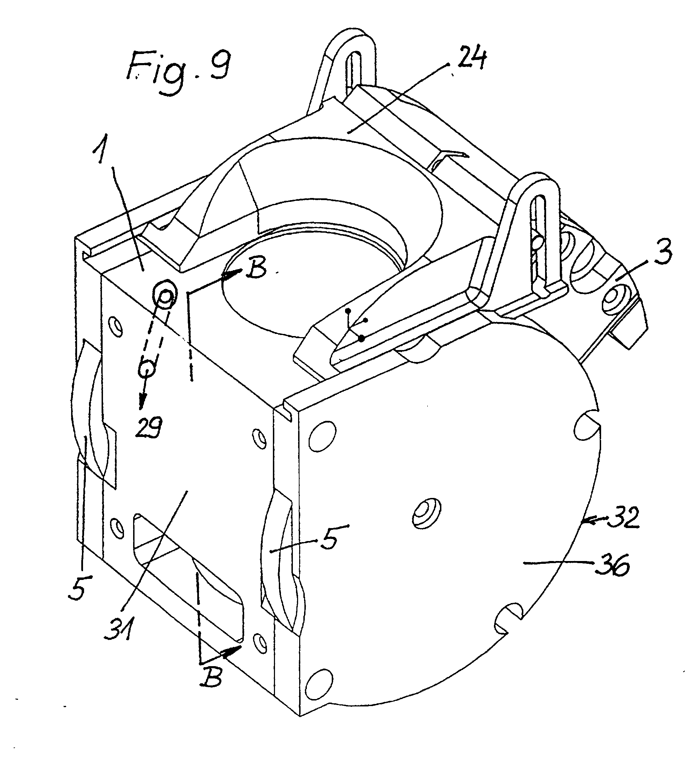

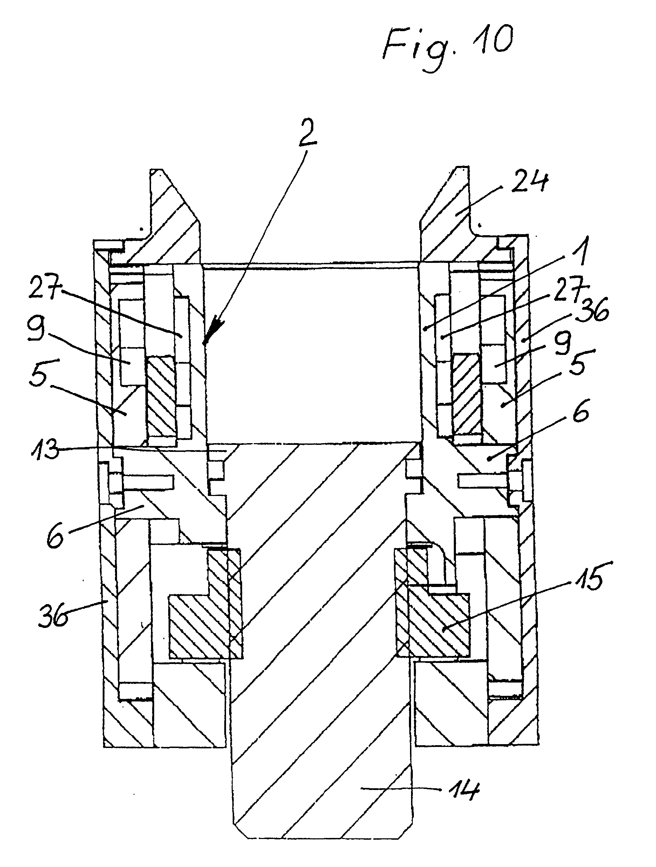

Die Figuren 9 bis 17 zeigen eine weitere Ausführungsform einer derartigen Brüheinrichtung, die insbesondere zum Zubereiten von Espresso geeignet ist. Hierbei erfolgt die Steuerung und Führung des Brausekörpers 3 in der gleichen Weise wie bei der Ausführungsform nach den Figuren 1 bis 8, während der Siebkörper 4 einen Kolben 13 aufweist, der an einer Spindel 14 angeordnet ist. Diese Spindel 14 ist innerhalb eines Zahnrades 15 angeordnet, das außen über einen Antrieb 42 angetrieben werden kann. Dadurch ergibt sich die axiale Verschiebung des Kolbens 13. Zum Ausstoßen des verdichteten und verbrauchten Mehls 37 dient ein Wischer 24, der an der Oberseite 22 angebracht ist. Dieser Wischer 24 wird von dem Brausekörper 3 betätigt und ist mit diesem über einen Kupplungsstift 43, der in einem Langloch 44 am Wischer 24 geführt ist, betätigt. Der Wischer 24 ist in einer Gleitbahn 45 des Zylindergehäuses 1 geführt.

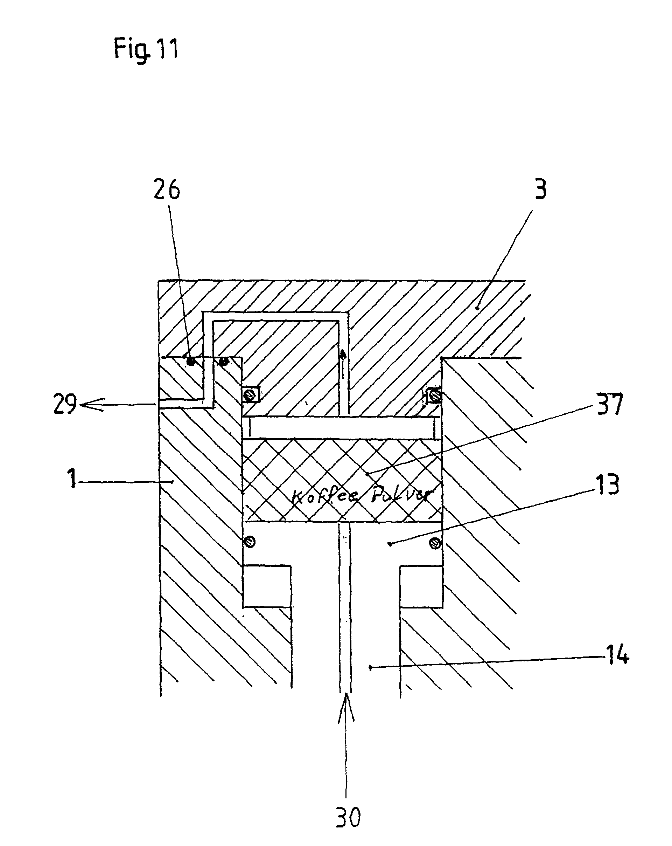

In Fig. 11 ist die Wasserzuführung und die Abnahme des fertigen Produktes dargestellt, wobei der Wassereintritt 30 über den Kolben 13 und die Spindel 14 erfolgt. Der Austritt 29 erfolgt am Gehäuse 1 über den Brausekörper 3, wobei zwischen den Teilen eine entsprechende Dichtung 26 vorgesehen ist. Wasser und Kaffee kann entweder wie beschrieben über das Zylindergehäuse 1 geführt werden, aber auch direkt über den Brausekörper 3 bzw. den Siebkörper 4.

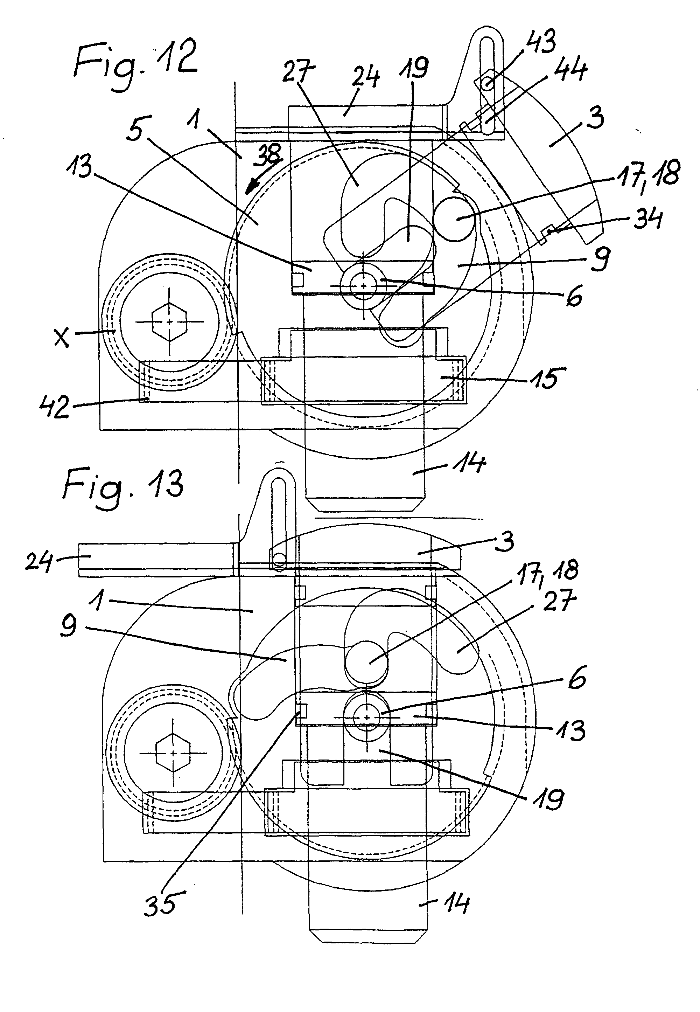

Die Verfahrensschritte werden nachfolgend, ausgehend von Fig. 12 erläutert. Der Brausekörper 3 ist nach außen verschoben und radial weggeschwenkt und der Kolben 13 befindet sich ebenfalls in seiner untersten Position.

Nach dem Einfüllen des Kaffeemehls in den Zylinder 2 wird der Brausekörper 3 in die Achse des Zylinders 2 verschwenkt und nach unten hin verschoben (Fig. 13).

Gemäß einem weiteren Verfahrensschritt wird der Kolben 13 nach oben verschoben und das dazwischen befindliche Kaffeemehl 37 verdichtet.

Über die Spindel 14 und den Kolben 13 wird nunmehr das Brühwasser eingegeben. Der gebrühte Kaffee wird sodann an der Rückwand 31 abgeführt.

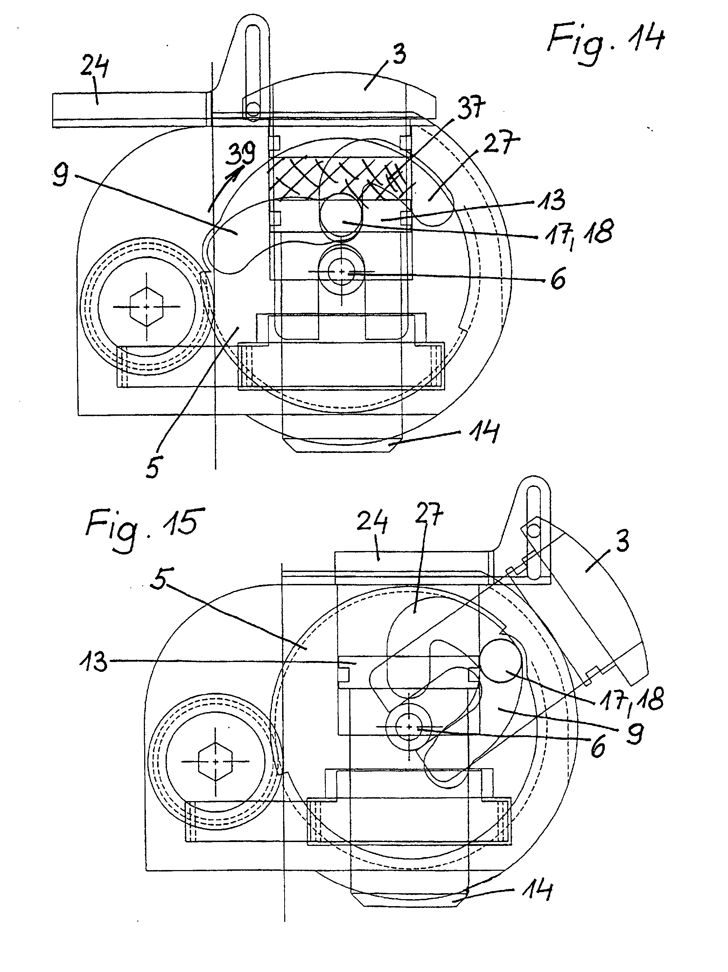

In einem weiteren Verfahrensschritt (Fig. 15) wird durch Verdrehen der Kurvenscheiben 5 in Pfeilrichtung 39 der Brausekörper 3 nach oben geschoben und seitlich weggeschwenkt.

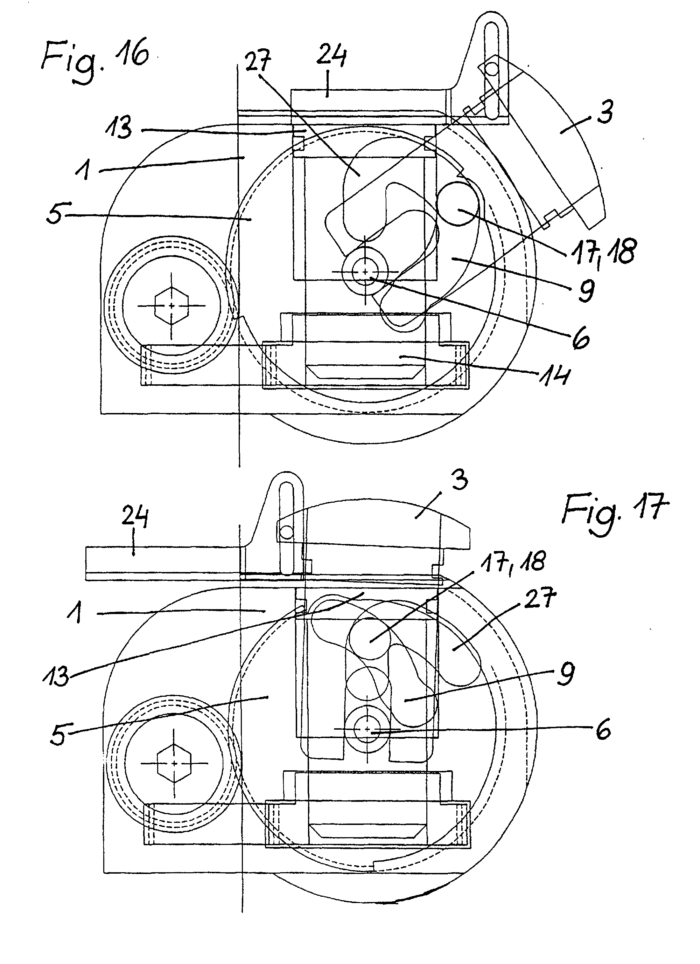

Gemäß dem Verfahrensschritt nach Fig. 16 wird dann das verbrauchte, verdichtete Kaffeemehl 37 mit Hilfe des Kolbens 13 zur Oberseite 22 verschoben. Durch Verdrehen der Kurvenscheiben 5 in Pfeilrichtung 38 wird der Brausekörper 3 nach innen geschwenkt und nimmt dabei den Wischer 24 mit, der das verbrauchte Kaffeemehl 37 seitlich entfernt (Fig. 17). Danach schwenkt der Brausekörper 3 wieder nach vorne und der untere Kolben 13 fährt wieder bis zum unteren Anschlag, so daß sich die Position der Einzelteile gemäß Fig. 12 ergibt. Die Brüheinrichtung befindet sich somit in der Ausgangsposition für die nächste Brühung.

## Patentansprüche

1. Brüheinrichtung zur Zubereitung von Kaffee oder Tee mit einem Zylindergehäuse (1), das einen den Zylinder (2) verschließenden Brausekörper (3) sowie einen Siebkörper (4) aufweist, wobei die Bewegung des Brausekörpers (3) mittels Kurvenscheiben (5) steuerbar ist, **dadurch gekennzeichnet, daß** das Zylindergehäuse (1) orthogonal zur Zylinderachse zentrale Zapfen (6) und zu beiden Seiten in der Vertikalebene (7) der Zapfen (6) an glatten Außenflächen (8) spiegelbildliche Kurvenbahnen (27) aufweist, daß auf den Zapfen (6) beidseitig Kurvenscheiben (5) mit weiteren Kurvenbahnen (9) zur Steuerung der Bewegungen des Brausekörpers (3) angeordnet sind.

2. Brüheinrichtung nach Anspruch 1, **dadurch gekennzeichnet, daß** der Siebkörper (4) zwei seitliche Schenkel (11) mit Zapfen (12) aufweist, die zum Verschieben in der Zylinderachse in Kurvenbahnen (10) der Kurvenscheiben (5) laufen.

3. Brüheinrichtung nach Anspruch 1, **dadurch gekennzeichnet, daß** zum Verschieben des Siebkörpers (4) oder eines Kolbens (13) ein Eigenantrieb (42, x) vorgesehen ist.

4. Brüheinrichtung nach Anspruch 1 bis 3, **dadurch gekennzeichnet, daß** der Brausekörper (3) zur beidseitigen Führung außen am Gehäuse (1) seitliche Schenkel (16) mit jeweils beidseitigen Zapfen (17, 18) aufweist, die in Kurvenbahnen (9, 27) des Gehäuses (1) und der Kurvenscheiben (5) laufen.

5. Brüheinrichtung nach Anspruch 4, **dadurch gekennzeichnet, daß** die seitlichen Schenkel (11, 16) des Brausekörpers (3) und des Siebkörpers (4) parallel zur Zylinderachse verlaufende, nach außen offene Langlöcher (19, 20) aufweisen, die an den Gehäusezapfen (6) geführt sind.

6. Brüheinrichtung nach Anspruch 2, **dadurch gekennzeichnet, daß** an der Innenseite der Kurvenscheiben (5) die Kurvenbahnen (9) für den Brausekörper (3) und an der Außenseite die Kurvenbahnen (10) für den Siebkörper (4) angeordnet sind.

7. Brüheinrichtung nach Anspruch 1 bis 6, **dadurch gekennzeichnet, daß** die Kurvenscheiben (5) am Umfang mit einer Verzahnung (21) versehen sind.

8. Brüheinrichtung nach Anspruch 3, **dadurch gekennzeichnet, daß** der Kolben (13) eine angesetzte Spindel (14) aufweist, die mit einem im Zylindergehäuse (1) gelagerten und angetriebenen Zahnrad (15) mit Innengewinde zusammenwirkt.

9. Brüheinrichtung nach einem der Ansprüche 1 bis 8, **dadurch gekennzeichnet, daß** an der Oberseite (22) oder Unterseite (23) des Zylindergehäuses (1) quer verschiebbare Wischer (24, 25) angeordnet sind.

10. Brüheinrichtung nach Anspruch 9, **dadurch gekennzeichnet, daß** der an der Gehäuseoberseite (22) angeordnete Wischer (24) seitlich am Brausekörper (3) angelenkt ist.

11. Brüheinrichtung nach einem der Ansprüche 1 bis 10, **dadurch gekennzeichnet, daß** die Brühwasserzuführung (28, 30) in den Brausekörper (3) über das Zylindergehäuse (1) mit einem Elastomerformteil (26) oder den Kolben (13) erfolgt.

12. Brüheinrichtung nach einem der Ansprüche 1 bis 11, **dadurch gekennzeichnet, daß** die Baugruppe in eine Rückwand einrastbar ist.

## Claims

1. Brewing device for preparing coffee or tea comprising a cylinder housing (1) having a sprinkler body (3) closing the cylinder (2) and a sieve body (4), wherein the movement of the sprinkler body (3) may be controlled by cam discs (5), **characterised in that** the cylinder housing (1) has central pins (6) orthogonally to the cylinder axis and reflective cam tracks (27) on smooth external faces (8) on both sides in the vertical plane (7) of the pins, **in that** cam discs (5) with further cam tracks (9) for controlling the movements of the sprinkler body (3) are arranged on both sides of the pins (6).

2. Brewing device according to claim 1, **characterised in that** the sieve body (4) has two lateral legs (11) with pins (12) which, for displacement in the cylinder axis, run in cam tracks (10) of the cam discs (5).

3. Brewing device according to claim 1, **characterised in that** a self-propelling means (42, x) is provided for displacement of the sieve body (4) or of a piston (13).

4. Brewing device according to claims 1 to 3, **characterised in that** the sprinkler body (3) has lateral legs (16) for guidance on both sides, externally on the housing (1), each with pins (17, 18) on both sides, the pins (17, 18) running in cam tracks (9, 27) of the housing (1) and of the cam discs (5).

5. Brewing device according to claim 4, **characterised in that** the lateral legs (11, 16) of the sprinkler body (3) and of the sieve body (4) have elongate slots (19, 20) which extend parallel to the cylinder axis, are open outwardly and are guided on the housing pins (6).

6. Brewing device according to claim 2, **characterised in that** the cam tracks (9) for the sprinkler body (3) are arranged on the interior of the cam discs (5) and the cam tracks (10) for the sieve body (4) on the exterior.

7. Brewing device according to claims 1 to 6, **characterised in that** the cam discs (5) are provided with peripheral teeth (21).

8. Brewing device according to claim 3, **characterised in that** the piston (13) has an applied spindle (14) which cooperates with a driven, internally threaded gear-wheel (15) mounted in the cylinder housing (1).

9. Brewing device according to any of claims 1 to 8, **characterised in that** transversely displaceable wipers (24, 25) are arranged on the upper side (22) or under side (23) of the cylinder housing (1).

10. Brewing device according to claim 9, **characterised in that** the wiper (24) arranged on the upper side (22) of the housing is hinged on the side of the sprinkler body (3).

11. Brewing device according to any of claims 1 to 10, **characterised in that** the brewing water intake (28, 30) into the sprinkler body (3) takes places via the cylinder housing (1) with an elastomeric shaped part (26) or the piston (13).

12. Brewing device according to any of claims 1 to 11, **characterised in that** the module can be latched into a rear wall.

## Revendications

1. Dispositif d'échaudage pour la préparation de café ou de thé comprenant un corps de cylindre (1), qui présente un corps d'arrosage (3) ainsi qu'un corps de filtrage (4) fermant le cylindre (2), le déplacement du corps d'arrosage (3) pouvant être commandé au moyen de cames (5), **caractérisé en ce que** le corps de cylindre (1) présente des tourillons centraux (6) orthogonaux à l'axe du cylindre et des coulisses (27) symétriques de part et d'autre dans le plan vertical (7) des tourillons (6) sur des surfaces extérieures lisses (8), et **en ce que** des cames (5) avec d'autres coulisses (9) sont disposées bilatéralement sur les tourillons (6) pour la commande des déplacements du corps d'arrosage (3).

2. Dispositif d'échaudage suivant la revendication 1, **caractérisé en ce que** le corps de filtrage (4) présente deux branches latérales (11) avec des tourillons (12), qui passent pour le déplacement dans l'axe du cylindre dans des coulisses (10) des cames (5).

3. Dispositif d'échaudage suivant la revendication 1, **caractérisé en ce qu'**il est prévu une commande propre (42, x) pour le déplacement du corps de filtrage (4) ou d'un piston (13).

4. Dispositif d'échaudage suivant l'une des revendications 1 à 3, **caractérisé en ce que** le corps d'arrosage (3) présente pour le guidage bilatéral à l'extérieur du corps (1) des branches latérales (16) avec des tourillons (17, 18) respectivement bilatéraux, qui passent dans des coulisses (9, 27) du corps (1) et des cames (5).

5. Dispositif d'échaudage suivant la revendication 4, **caractérisé en ce que** les branches latérales (11, 16) du corps d'arrosage (3) et du corps de filtrage (4) présentent des trous oblongs (19, 20) s'étendant parallèlement par rapport à l'axe du cylindre, ouverts vers l'extérieur, et guidés sur les tourillons (6) du corps.

6. Dispositif d'échaudage suivant la revendication 2, **caractérisé en ce que** les coulisses (9) pour le corps d'arrosage (3) sont disposées sur le côté intérieur des cames (5), et les coulisses (10) pour le corps de filtrage (4) sont disposées sur le côté extérieur.

7. Dispositif d'échaudage suivant l'une des revendications 1 à 6, **caractérisé en ce que** les cames (5) sont munies d'une denture (21) sur leur pourtour.

8. Dispositif d'échaudage suivant la revendication 3, **caractérisé en ce que** le piston (13) présente une broche (14) rapportée, qui concourt avec une roue dentée (15) munie d'un taraudage, montée et entraînée dans le corps de cylindre (1).

9. Dispositif d'échaudage suivant l'une des revendications 1 à 8, **caractérisé en ce que** des racloirs (24, 25) déplaçables transversalement sont disposés sur le côté supérieur (22) ou sur le côté inférieur (23) du corps de cylindre (1).

10. Dispositif d'échaudage suivant la revendication 9, **caractérisé en ce que** le racloir (24), disposé sur le côté supérieur (22) du corps, s'articule latéralement sur le corps d'arrosage (3).

11. Dispositif d'échaudage suivant l'une des revendications 1 à 10, **caractérisé en ce que** l'arrivée d'eau d'échaudage (28, 30) dans le cors d'arrosage (3) est assurée par l'intermédiaire du corps de cylindre (1) par une pièce moulée élastomère (26) ou par le piston (13).

12. Dispositif d'échaudage suivant l'une des revendications 1 à 11, **caractérisé en ce que** le groupe d'échaudage peut être enclenché dans une paroi arrière.
